# EUROPEAN PATENT SPECIFICATION

(11) **EP 2 664 184 B1**
(45) Date of publication and mention of the grant of the patent: **18.02.2015**
(21) Application number: 11817437.4
(22) Date of filing: 28.12.2011
(51) Int. Cl.: H04B 7/155, H04W 48/08, H04W 24/02, H04W 28/18, H04W 84/04

(54) **BANDWIDTH CONFIGURATION AND REPORTING FOR RELAY LINKS**
BANDBREITENKONFIGURATION UND MELDUNG FÜR RELAISVERBINDUNGEN
CONFIGURATION DE BANDE PASSANTE ET RAPPORT DES LIAISONS RELAIS

(30) Priority: 11.01.2011 US 201161431685 P
(43) Date of publication of application: 20.11.2013
(73) Proprietor: Telefonaktiebolaget LM Ericsson (PUBL), 164 83 Stockholm (SE)
(72) Inventor: QUESETH, Olav, SE-170 69 Solna (SE); KAZMI, Muhammad, SE-167 39 Bromma (SE)
(74) Representative: Kühn, Friedrich Heinrich
(86) International application number: PCT/SE2011/051601
(87) International publication number: WO 2012/096615

(56) References cited:
- EP-A1- 2 192 699
- EP-A2- 1 777 877
- LG ELECTRONICS INC: "New RRC procedures for RN", 3GPP DRAFT; R2-104876 NEW RRC PROCEDURES FOR RN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain; 20100823, 17 August 2010 (2010-08-17), XP050452003, [retrieved on 2010-08-17]
- ERICSSON ET AL: "Relay supported BW configurations", 3GPP DRAFT; R4-110040, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Austin; 20110117, 12 January 2011 (2011-01-12), XP050475221, [retrieved on 2011-01-12]
- HUAWEI ET AL: "Relay supported bandwidths", 3GPP DRAFT; R4-113167, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Barcelona, Spain; 20110509, 11 May 2011 (2011-05-11), XP050502942, [retrieved on 2011-05-16]
- 3GPP: "3rd Generation Partnership Project; Technical Specification Group TSG RAN; Evolved Universal Terrestrial Radio Access (E-UTRA); Relay radio transmission and reception (Release 10)", 3GPP DRAFT; R4-115168 TR 36.826 V 0.11.0 RELAY WI REPORT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Zhuhai; 20111010, 3 October 2011 (2011-10-03), XP050544233, [retrieved on 2011-10-03]

## Description

### TECHNICAL FIELD

The present invention relates generally to telecommunications systems, and in particular, to methods, systems and, devices associated with relays and relay links in radiocommunications systems.

### BACKGROUND

Radiocommunication networks were originally developed primarily to provide voice services over circuit-switched networks. The introduction of packet-switched bearers in, for example, the so-called 2.5G and 3G networks enabled network operators to provide data services as well as voice services. Eventually, network architectures will likely evolve toward all Internet Protocol (IP) networks which provide both voice and data services. However, network operators have a substantial investment in existing infrastructures and would, therefore, typically prefer to migrate gradually to all IP network architectures in order to allow them to extract sufficient value from their investment in existing infrastructures. Also to provide the capabilities needed to support next generation radiocommunication applications, while at the same time using legacy infrastructure, network operators could deploy hybrid networks wherein a next generation radiocommunication system is overlaid onto an existing circuit-switched or packet-switched network as a first step in the transition to an all IP-based network. Alternatively, a radiocommunication system can evolve from one generation to the next while still providing backward compatibility for legacy equipment.

One example of such an evolved network is based upon the Universal Mobile Telephone System (UMTS) which is an existing third generation (3G) radiocommunication system that is evolving into High Speed Packet Access (HSPA) technology. Yet another alternative is the introduction of a new air interface technology within the UMTS framework, e.g., the so-called Long Term Evolution (LTE) technology. Target performance goals for LTE systems include, for example, support for 200 active calls per 5 MHz cell and sub 5 ms latency for small IP packets. Each new generation, or partial generation, of mobile communication systems add complexity and abilities to mobile communication systems and this can be expected to continue with either enhancements to proposed systems or completely new systems in the future.

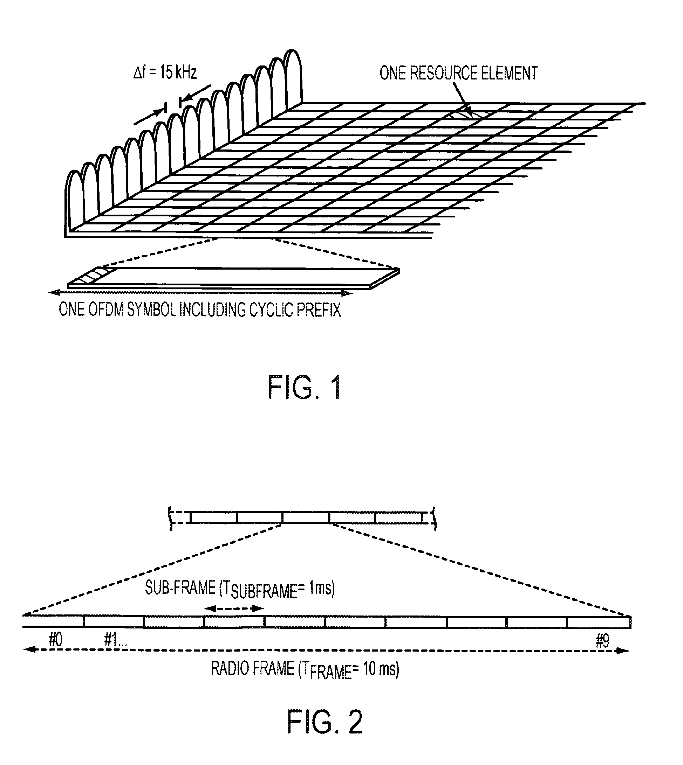

LTE uses orthogonal frequency division multiplexing (OFDM) in the downlink and discrete Fourier transform (DFT)-spread OFDM in the uplink. The basic LTE downlink physical resource can thus be seen as a time-frequency grid as illustrated in Figure 1, where each resource element corresponds to one OFDM subcarrier during one OFDM symbol interval. In the time domain, LTE downlink transmissions are organized into radio frames of 10 ms, each radio frame consisting of ten equally-sized subframes of length T_{subframe} = 1 ms as shown in Figure 2.

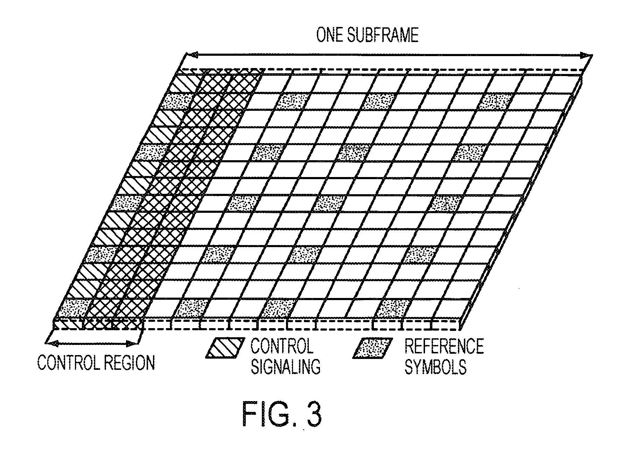

Furthermore, the resource allocation in LTE is typically described in terms of resource blocks, where a resource block corresponds to one slot (0.5 ms) in the time domain and 12 contiguous subcarriers in the frequency domain. Resource blocks are numbered in the frequency domain, starting with 0 from one end of the system bandwidth. Downlink transmissions are dynamically scheduled, i.e., in each subframe the base station -- typically referred to as an eNB in LTE-- transmits control information indicating to which terminals and on which resource blocks the data is transmitted during the current downlink subframe. This control signaling is typically transmitted in the first 1, 2, 3 or 4 OFDM symbols in each subframe. A downlink signal with 3 OFDM symbols as the control region is illustrated in Figure 3.

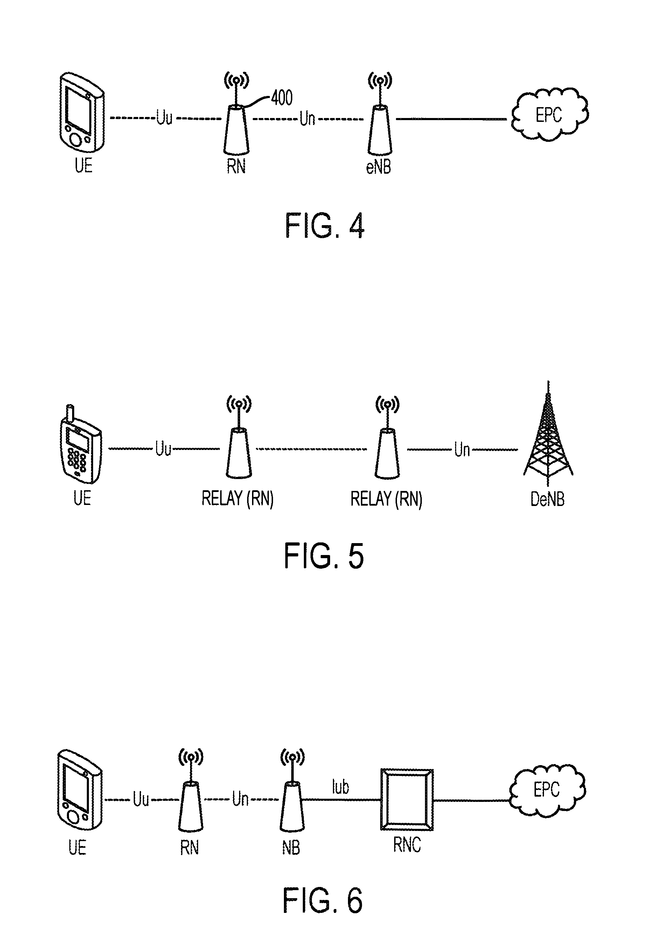

Relay nodes (RNs) are used to receive and re-transmit/forward signals intended for UEs in a mobile network. A relay node comprises of at least two physical layer entities where each entity each manages, controls or operates a radio interface or relay radio link. The relay radio link may also be termed as relay wireless link or simply relay link. The relay may further be comprised of at least one backhaul radio link and one access radio link. One physical layer entity which manages the access radio link is used for communication with UEs. Another physical layer entity which manages the backhaul radio link is used for communication with the donor node. In LTE the donor node is called a donor eNode B. A number of UEs can be served by a relay. The primary objective of the relay node is to enhance the coverage in the uplink and downlink. In LTE the relay connectivity or architecture includes, for example, an RN connected wirelessly to a donor cell of a donor eNode B (DeNB) via the radio backhaul link, and UEs connect to the RN via the radio access link. In LTE the backhaul link (DeNB-RN link) and access link (RN-UE link) are termed as the Un and Uu interfaces, respectively. The connection between different nodes when an RN 400 is used is shown, for example, in Figure 4. The RN 400 may be fixed or wireless. Furthermore, a wireless RN 400 may be implemented as a standalone mobile relay or a wireless terminal may act as a relay. Typically a mobile relay may be deployed in a movable vehicle such as a bus, train, ferry, etc. in order to primary serve UEs in the movable vehicle but also in surrounding areas. The illustration in Figure 4 depicts a single hop relay architecture.

Currently LTE does not specify multi-hop capability of relays. However one extension is to use multiple RNs between the served UE and the eNB. In such multi-hop architectures, the information "hops" from the donor eNB in LTE (or a donor base station in another system) through multiple RNs and until it reaches the UE. In a similar manner information sent from the UE traverses multiple RNs on the way to the donor eNB in LTE (or a donor base station in another system). An example of the multi-hop relay concept based on 2-hops is illustrated in Figure 5. A multi-hop relay system can be employed in any system e.g. HSPA (i.e. UTRA FDD and UTRA TDD), GSM (including GERAN/EDGE), 3GPP2 CDMA technologies (e.g. CDMA2000 and HRPD) or multi-RAT CA system such as HSPA-LTE CA etc.

In principle the relay architecture similar to that shown in Figure 4 may also be employed in other technologies such as in HSPA FDD/TDD, GSM/GERAN, CDMA2000/HRPD, WiMax etc. However the relay architecture may be slightly different in other technologies. In general an RN is connected via backhaul link to any type of donor base station (e.g. belonging to HSPA, GSM, CDMA200, WiMax technology etc). For example in HSPA, the RN is connected to the Node B, which in turn is connected to the radio network controller (RNC) via an Iub interface. An exemplary relay architecture in HSPA is shown in Figure 6.

With respect to the usage of the spectrum, the operation of the relay can be classified into the following two categories. **In band relay:** In this case the backhaul link and the access link operate using the same carrier frequency. Typically the communication over the backhaul and access links take place in time domain manner. However, in principle the simultaneous operation over the two links may also be possible provided sufficient isolation between the access and backhaul links are achieved e.g. by the virtue of directive transmission. **Out band relay:** In this case the backhaul link and the access link operate using different carrier frequencies.

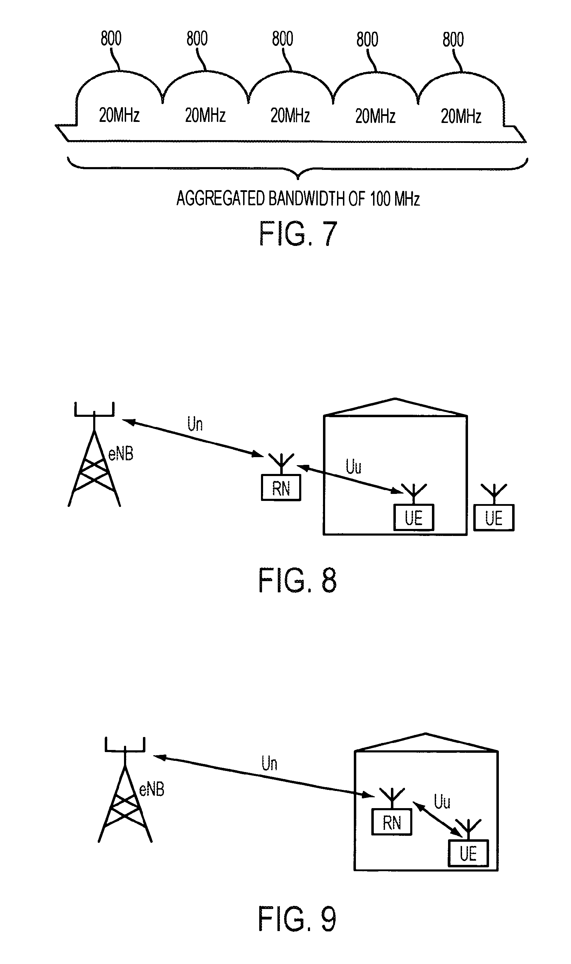

The LTE Rel-8 standard has recently been standardized, supporting bandwidths up to 20 MHz. In order to meet the upcoming IMT-Advanced requirements, 3GPP is currently standardizing LTE Rel-10, also referred to as "LTE-Advanced". One property of Rel-10 is the support of bandwidths larger than 20 MHz while still providing backwards compatibility with Rel-8. This is achieved by aggregating multiple component carriers, each of which can be Rel-8 compatible, to form a larger overall bandwidth to a Rel-10 terminal. For example, as shown in Figure 7, five component carriers (CCs) 800 can be aggregated into a single 100 MHz bandwidth. Note that carrier aggregation (CA) can involve contiguous intra-band carrier aggregation, non-contiguous intra-band carrier aggregation, and/or inter-band carrier aggregation. The CA may be used in downlink, uplink or in both directions. The carrier aggregation is also called (e.g., interchangeably called) "multi-carrier system", "multi-carrier operation", "multi-carrier" transmission and/or reception. Typically the component carriers in carrier aggregation belong to the same technology (e.g., either all are of WCDMA or LTE). However the carrier aggregation between carriers of different technologies is also possible to increase the throughput.

The CA may also be used in a relay environment to increase the data rate over the backhaul and/or access links. Furthermore, the carrier aggregation may be used in both in band and out band relays. The same relay may also be configured to operate in the baseline or legacy single carrier operating mode.

Typically more than one relay node is connected by the same donor base station. The relays are generally deployed in the coverage area of the donor cell. As the primary function of relay node is for the coverage improvement, therefore both outdoor and indoor relay deployment scenarios are beneficial. The outdoor relay can be used for cell edge coverage improvement. The indoor relay can be used for solving indoor dead spot and hot spot scenarios. Furthermore when deployed outdoor or indoor the antennas used for the backhaul and access links may either be in the indoor or outdoor i.e. any combination is possible in principle. Furthermore different MIMO configuration may also be used in the access and the backhaul links e.g. relay may bear transmit / receive antennas = 2 / 2 and transmit / receive antennas = 4 / 4 on the access and backhaul links respectively.

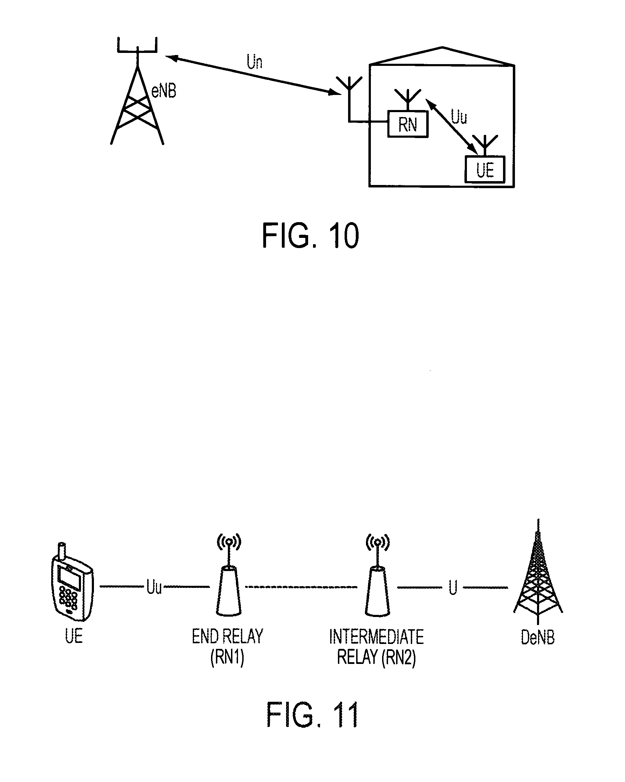

Examples of three relay deployment scenarios are illustrated in Figures 8-10. In Figure 8, the relay is deployed outdoor; all the relay antennas for the transmission and reception of signals over the backhaul and access links are also located in the outdoors. The outdoor relay serves the outdoor users but also indoor users. In Figure 9, the relay is deployed indoor; all the relay antennas for the transmission/reception of signals over the backhaul and access links are also located in the indoor. The indoor relay primarily serves indoor users. In Figure 10, the relay is deployed indoor. The relay antennas for the transmission/reception of signals over the backhaul link are located outdoor. However the antennas for access link are located in the indoor. This type of relay deployment is also called "Truwall", which is meant to primarily serve the indoor users. The use of outdoor backhaul antennas results in improved backhaul link quality e.g. compared to pure indoor deployment.

A relay node may also include a multi-standard radio (MSR). An MSR relay contains common radio frequency (RF) components (e.g. power amplifiers, RF filters) which can be used to operate on more than one RAT or more than one carrier within the same RAT. More specifically the MSR relay may also be termed as multi-carrier multi-standard radio (MC-MSR) BS due to the fact that it may comprise of single RAT with more than one carrier. Hence single RAT MSR is a special case of the MSR. Furthermore a special case of MSR may also comprise of a relay, which supports single carrier within a RAT i.e. single carrier single RAT MSR relay. The MSR relay may be FDD or TDD. Examples of RATs supported in FDD MSR relay are: LTE FDD, UTRA FDD and GSM. Another example is: LTE FDD and 3GPP2 CDMA technologies (e.g. CDMA200 and HRPD). Examples of RATs supported in FDD MSR relay are: LTE TDD and UTRA TDD. The carriers within FDD or TDD MSR relay may be contiguous or non-contiguous. Furthermore such relay may be used in single hop or in multiple hop relay system. All of the embodiments described herein also apply to relays which are based on the MSR principle.

A relay may operate on the same operating frequency bands which are specified for the BS depending upon the supported technology e.g. UTRA FDD, E-UTRA FDD, MSR FDD or TDD, etc. For example the LTE TDD relay may operate on E-UTRA TDD operating frequency band 40 (2.3 GHz). Similarly, as an example, the LTE FDD relay may operate on E-UTRA FDD operating frequency band 1 (2 GHz). The MSR FDD relay supporting UTRA and E-UTRA may operate on MSR FDD operating frequency bands e.g. on band 7 (2.6 GHz). Similarly the MSR FDD relay supporting GSM, UTRA and E-UTRA may operate on MSR band 3 (1800 MHz).

In UMTS the channel bandwidth (BW) is the same in both uplink and downlink. For example in WCDMA the channel bandwidth is 5 MHz. In LTE the channel BW varies between 1.4 MHz to 20 MHz. Presently BWs corresponding to 1.4, 3, 5, 10, 15 and 20 MHz are supported. In future more channel BWs may be introduced. Another related term, transmission bandwidth' is also used in LTE. The difference is that the transmission BW is expressed in terms of number of RBs rather than in MHz

However all the specified LTE operating frequency bands may not necessarily support all possible channel BWs. For example smaller frequency bands (e.g. LTE FDD band 8 (900 MHz) which is 35 MHz wide in each direction) don't generally support larger BWs such as 15 or 20 MHz. However larger bands like band 2 or band 3 supports all possible LTE channel BWs.

In LTE it is mandatory for the UE to meet all the requirements corresponding to the channel BWs, which are specified for its supported frequency bands. For example if the UE is capable of supporting band 8 then it should meet requirements for BWs of 1.4, 3, 5 and 10 MHz. On the other hand the BW(s) supported by the LTE eNode B are declared by the manufacturer. For example the band 8 capable eNode B may be declared to meet the requirements only for channel BW of 5 MHz. The eNode may also support more than one BW. For example the band 8 capable eNode B may be declared to meet the requirements for channel BWs of 1.4 MHz and 5 MHz

Another feature of LTE is that in LTE the mobility measurements such as RSRP and RSRQ are measured by the UE over the cell specific reference signals (CRS). The measurement BW of the mobility measurements (aka maximum allowed measurement BW) can be one of the cell transmission BWs i.e. smaller than or equal to the cell transmission BW. The max allowed measurement BW is signalled by the eNode B to the UE.

To enable positioning in LTE new physical signals dedicated for Observed Time Difference of Arrival (OTDOA) positioning called the positioning reference signals

(PRS) were introduced in Release 9. The PRS are transmitted by the eNode B and facilitate the target device to perform OTDOA positioning measurements namely reference time difference (RSTD). The target device can be any device whose position is to be determined. Examples of target device are user equipment (UE), relay, any fixed or mobile wireless device and even a base station.

The RSTD is measured as the time difference of arrival of PRS from the reference and the neighbour cells. The PRS are periodically transmitted in pre-defined positioning subframes grouped by several consecutive downlink subframes. The bandwidth of the PRS can be smaller or equal to the cell transmission bandwidth. The PRS will at least be transmitted on the access link to facilitate the UE to perform the positioning measurements. The positioning node (i.e. E-SMLC in LTE) requests the target device using LPP signaling protocol to perform the desired positioning measurements.

Considering the usage of relays in the new environment which is being developed by the ongoing standardization efforts in LTE, there are various possibilities. For example, carrier aggregation may also be used in relay environment to increase the data rate over the backhaul and/or access links. Furthermore, the carrier aggregation may be used in both in band and out band relays. The same relay may also be configured to operate in the baseline or legacy single carrier operating mode. In CA, in order to reduce the signaling overheads one or more CC may carry limited number of reference or pilot signals. These CCs may be regarded as the CC with limited RS or fully or partially clean CC. In this type of CC the RS BW can be smaller than the entire BW of the CC.

In LTE systems the donor eNode B configures the relay node to operate on certain channel bandwidth. Additionally, the relay node should support all the channel bandwidths specified for the given operating frequency band.

However, there remain a number of issues regarding the usage of relays in evolving systems, such as LTE, which would benefit from further consideration.

3GPP TSG-RAN WG2 #71, R2-104876 "New RRC procedures for RN" describes a proposal to include some RN specific information in a RRC procedure for the RN.

EP 1 777 877 A2 describes an apparatus and a method for supporting multiple links in a multi-hop relay cellular network using at least two frequency bands.

EP 2 192 699 A1 describes an apparatus, a system, a method, and a computer program product for multi-mode relaying. Specifically, a radio base station and a relay node connectable with each other by a secondary out-of-band wireless link in addition to an in-band link are described. The in-band link is used to control the activation/deactivation of the secondary link.

### ABBREVIATIONS/ACRONYMS

- 3GPP: 3^{rd} Generation Partnership Project
- BS: Base Station
- eNodeB: evolved Node B
- E-SMLC: Evolved SMLC
- LTE: Long-Term Evolution
- RRC: Radio Resource Control
- SMLC: Serving Mobile Location Center
- UE: User Equipment
- UMTS: Universal Mobile Telecommunications System
- RN: Relay node
- RNC: Radio link controller
- HSPA: High speed packet access
- HRPD: High rate packet data
- SAS: Stand-Alone-Serving mobile location center
- MME: Mobility management entity
- SON: Self Organizing Network
- OSS: Operational Support Systems
- O&M: Operation and Maintenance
- OTDOA: Observed Time Difference of Arrival

### SUMMARY

The present invention relates to methods and nodes as set forth in claims 1, 6, 11 and 13. Further embodiments are set forth in the dependent claims.

### BRIEF DESCRIPTION OF THE DRAWINGS

The exemplary embodiments described below will be understood, in conjunction with the drawings submitted herewith in which:
Figure 1 represents an LTE OFDM downlink signal in the frequency/time domain;
Figure 2 shows a subframe associated with an LTE OFDM signal in the time domain;
Figure 3 illustrates a downlink signal with 3 OFDM symbols as the control region;
Figures 4-6 depicts various relay configurations;
Figure 7 shows an example of carrier aggregation;
Figures 8-11 illustrates other relay configurations;
Figure 12 depicts a generic node in which embodiments can be implemented; and
Figures 13 and 14 are flowcharts depicting methods according to embodiments.

### DETAILED DESCRIPTION

The following detailed description of the exemplary embodiments refers to the accompanying drawings. The same reference numbers in different drawings identify the same or similar elements. Also, the following detailed description does not limit the invention. Instead, the scope of the invention is defined by the appended claims. The following embodiments are discussed, for simplicity, with regard to the terminology and structure of LTE systems. However, the embodiments to be discussed next are not limited to LTE systems but may be applied to other telecommunications systems.

Reference throughout the specification to "one embodiment" or "an embodiment" means that a particular feature, structure, or characteristic described in connection with an embodiment is included in at least one embodiment of the present invention. Thus, the appearance of the phrases "in one embodiment" or "in an embodiment" in various places throughout the specification are not necessarily all referring to the same embodiment. Further, the particular features, structures or characteristics may be combined in any suitable manner in one or more embodiments.

As mentioned briefly above, the implementation of new radiocommunication systems and standards may have impacts on relays and their utilization in such new systems. For example, even if a relay node supports all specified channel bandwidths in its supported band, different relay links may operate over different channel bandwidths. However, conventional techniques do not enable the controlling node (e.g. donor eNode B) to configure different channel bandwidths on different links of the relay node. Furthermore conventional techniques don not enable the relay node to report its bandwidth capability information to the controlling node (e.g. donor eNode B). Moreover, conventional techniques do not enable the donor node to configure the PRS bandwidth at the relay, which PRS BW may not be equal to the relay transmission bandwidth.

These, and other deficiencies of conventional relay techniques are addressed by these embodiments. For example, embodiments described herein include, among other things, identifiers for configuring and reporting bandwidths, methods in network node(s) for selecting relay bandwidths, methods in network node(s) for configuring a relay node to operate on selected bandwidths, methods in network node(s) for configuring a relay to report its bandwidth capability, methods in relay nodes for reporting their bandwidth capability to the network, methods in network node(s) for reporting relay bandwidth information to other nodes, methods in network node(s) for using relay bandwidths for network management and planning, and methods of bandwidth configuration and reporting in multi-hop relays. Additionally, the applicability of such embodiments to other RATs is discussed.

Prior to discussing such embodiments in detail, the meaning and examples of the following terminologies used in these embodiments are described below:
▪ First network node: This is the network node which at least partly controls the relay operation. It is capable of selecting and configuring the relay node to operate the relay access link and/or backhaul link channel bandwidths and/or reference signal bandwidth. It is also capable of requesting the relay node reports its bandwidth (e.g. channel, reference signal BWs) capabilities and receiving the reported bandwidth capabilities. Examples of a first network node are O&M node, OSS node, SON node, radio network controller, base station, Node B, eNode B, core network node (e.g. MME in LTE), base station controller, centralized network node, positioning node (e.g. E-SMLC in LTE or SAS node in HSPA), another relay network node in multi-hop relay etc.
▪ Second network node: This is the network node which communicates with the relay node over the backhaul link. Examples of a second network node are donor node, donor base station, donor Node B, donor eNode B, donor radio network controller, donor base station controller, etc. The first and second node may be the same in which case the first node bears the function of the first node i.e. first node may also configure/select relay BWs and request / receive relay BWs capabilities.
▪ Third network node: This is network node which receives the relay BW capabilities and/or selected/configured relay BWs information. It uses the received information to perform RRM tasks e.g. network planning, network optimization etc. Examples of a third node are O&M, OSS, SON node, positioning node, network management controller etc. In some cases first, second and third node may be the same.
▪ Bandwidth: This is the bandwidth over which the network node (relay or eNode B) transmits or receives signals e.g. data signals, reference signals, specific type of reference signal such as PRS etc. In LTE different terminologies may be used to express bandwidths such as channel bandwidth, transmission bandwidth, measurement bandwidth or maximum allowed measurement bandwidth, reference signal (RS) BW such as PRS bandwidth (see below) etc. Some of these terms like channel BW is expressed in MHz Whereas other terms like transmission BW, RS BW, measurement BW, etc., may be expressed in terms of resource blocks (RBs) or PRS BW is expressed in terms of RB BW. Each relay link (access and backhaul) may have different bandwidths. Furthermore uplink and downlink BWs of each link can be the same or different. The embodiments described herein apply to all types of BWs or to other similar terms.
▪ Reference signal BW: This is the bandwidth over which the network node (e.g. relay, eNode B) transmits reference signals. The RS bandwidth may be the same or different compared to the channel or transmission bandwidth. Examples of reference signals are cell specific reference signal (CRS), dedicated reference signals, positioning reference signals (PRS) etc. For example the PRS BW can be smaller than the normal channel or transmission BW. In multi-carrier or carrier aggregation system the CRS BW of one or more component carriers can be smaller than the transmission bandwidth of the corresponding component carrier.

According to an embodiment, a set of identifiers to uniquely indicate the BW (e.g. size, type, link etc) of the relay are used by the:
- Network node when signaling / configuring the relay BW
- Network node when requesting the relay to report its BW capabilities
- Relay node when reporting its BW capabilities to the network
- Network node when signaling the relay BW to other network nodes

The set may comprise of 2 or more identifiers. For example:
- One identifier or tag may identify the type of BW e.g. whether it is channel BW or PRS BW or RS BW etc.
- The second identifier may identify the link i.e. whether the BW corresponds to the access or backhaul link. In case of multi-hop relay the backhaul link each backhaul link may have different identifier.
- The third identifier may identify the size of the BW e.g. 0 corresponds to the BW of 6 RBs whereas 5 correspond to the BW of 100 RBs etc.
- The fourth identifier may indicate whether the BW is of the uplink or downlink or same for both.
- The fifth identifier may indicate the frequency band to which the BWs correspond in case the relay supports more than one operating frequency bands.

According to exemplary embodiments, one or more of the above-described identifiers can be used in methods in a network node of selecting relay bandwidths. For example, according to an embodiment the first or second node selects the bandwidth (e.g. channel BW, RS BW, PRS BW etc) of each link of the relay i.e. access link and backhaul link(s). The selected channel bandwidth or transmission bandwidth or any other type of BW can be the same or different in case of the uplink and downlink bandwidth of each link. One or more of the following criteria (but not limited to) can be used by the suitable network node for selecting the appropriate bandwidths for the backhaul link and access link operations. The criteria may also be different for different types of BW e.g. different for channel BW and for PRS BW.

### UL performance consideration

In some FDD frequency bands (e.g. band 20) due to smaller duplex gap the larger bandwidth (e.g. 15 MHz or above) may lead to transmitter noise in the receiver. Hence the number of RBs or channels transmitted in the UL may have to be reduced compared to the maximum capacity e.g. out of 50 RBs only up to 25 RBs may be transmitted in the UL. In case the UL data rate requirement on any of the links is not very high then larger BW can be selected even for bands with smaller duplex dap.

### DL coverage consideration

In some frequency bands the larger BWs may lead to higher UE receiver sensitivity. This leads to lower data rate in cell coverage where the UE may operate down to its receiver sensitivity level. Hence in case higher data rate is desired at the cell border then larger BW of such frequency bands should be avoided.

### Capacity consideration

One important consideration is the desired capacity on different links. For example if the access link has higher traffic load then larger channel BW (e.g. 20 MHz) is typically selected for the access link operation. If the overall traffic load on a certain link is moderate then intermediate channel BW e.g. 5 MHz may be selected.

### Deployment scenario

The relay can be used in different deployment scenarios, radio environments etc. Examples of the scenarios are indoor, outdoor, dense urban areas etc. In indoor environments users typically require high data rates (e.g. to enable mobile broadband services). The output power of the relay in the indoor is also typically very low. Hence larger channel BW can be used on the access link of the indoor relay, which primarily serves the indoor users.

### Type and characteristics of relay

Another criterion whether the relay is fixed, mobile, wireless terminal acting as relay can also be used to select the bandwidths for different links. In case of mobile or wireless terminal acting as relay, the present radio conditions and/or location may also be considered in selecting the bandwidths. For example typically wireless terminal when acting as relay serves users which are in close range. Hence the smaller or moderate BW (e.g. 5 MHz) can be used on the access links. In case the radio conditions are poorer then relatively larger bandwidth (e.g. 10 MHz) can be used for serving the users on the access link. The battery power of the wireless relay is of paramount importance. Hence in order to save the battery of the wireless relay (i.e. wireless terminal acting as relay), the selected BW may typically be smaller or moderate. For example the default BW can be 5 MHz

There are also different manners according to various embodiments in which the bandwidths are selected by the suitable network node. These will be discussed below.

### Distributed selection mechanism of bandwidths

According to this embodiment the node which contains the relay BW information (i.e. acquired BW capabilities from relay or pre-determined set of possible relay BWs for the given band) selects the bandwidths for the different links. Hence either the first or the second node selects the BW. Furthermore different nodes may select different types of BWs. For example the second node (e.g. donor eNode B in LTE) may select the channel BW of all relay links or it may only select the channel BW of the backhaul link and the first node (e.g. network controller) may select the channel of the access link. Similarly the first node (e.g. positioning node) may select the PRS BW of the relay.

### Centralized selection mechanism of bandwidths

According to another embodiment other network nodes such as the third node may select the backhaul and access links' bandwidths. This is due to the fact that the third node which is generally a centralized node has more comprehensive information about the network planning, deployment scenario, network coverage etc. The node after selecting the relay BWs may signal this to the first or the second node which in turn configures the relay to operate its links over the selected BWs, e.g., as described below.

### Hierarchical selection mechanism of bandwidths

In another embodiment either both second and third node or first and third nodes can mutually decide the bandwidths to be used on different links. For example out of the possible bandwidths, the third node can provide the second node a recommended list of bandwidths for the access link and backhaul link operations. The third node can recommend the list of bandwidths based on a suitable criteria as described above, e.g. to ensure that the overall network performance is enhanced or required number of relays are minimized in the network etc. Then the first or the second node (e.g. donor BS) eventually selects the bandwidths based on additional suitable criteria described above, e.g. to achieve the desired coverage, meet the bit rate requirements on different links etc.

According to other embodiments, methods in network node of configuring the relay node to operate on selected bandwidths are contemplated. For example, the first or the second network node, after selecting the bandwidths for each link by using the set of principles described above, configures the selected bandwidths for different relay links. The configuration is achieved by the first or second node signaling the parameters associated with the selected bandwidths to the relay node. The associated parameters may be expressed in terms of one or more identifiers described above. The signaled parameter can be different for uplink and downlink bandwidths of each link. The first or second node configures the PRS bandwidth of at least the access link of the relay. The configuration signal or information to enable bandwidth configuration on different relay radio links typically contains one or more set of parameters, which are to be used by the relay node when configuring the bandwidth on different relay radio links. The configuration of bandwidth on different links is thus performed by the relay node based on the received configuration signal or information or parameters and one or more pre-determined rules. For example the parameter may comprise the size of bandwidth (e.g. number of resource blocks, size in terms of MHz etc), the type of bandwidth (e.g. reference signal bandwidth, channel bandwidth etc), an indicator of the frequency band, an indicator or identifier of each relay link associated with the set of parameters, an identifier of the bandwidth configuration set in case pre-defined bandwidths for different relay links are to be configured etc. The configurable bandwidth mechanism enables the donor node to semi-statically or dynamically control the bandwidth over which different relay links operate.

Another possibility is that the parameters may be grouped into configuration sets where each set consists of specific values for selected parameters. This reduces signaling overheads. The method is also useful in case some typical set of BWs on access and backhaul links are used more often. Hence such sets can be pre-defined in a table. An example of such a configuration set is given in Table 1:

**Table 1: Example of pre-defined configuration sets**

| **Configuration set** | **Bandwidth Backhaul link** | **Bandwidth Access link** |
|---|---|---|
| **Set #1** | **5 MHz** | **5 MHz** |
| **Set #2** | **10 MHz** | **5 MHz** |
| **Set #3** | **10 MHz** | **15 MHz** |

The bandwidth parameters can be signaled to the relay over a higher layer signaling protocol (e.g. RRC, LPP etc) or via L1/L2 signaling protocol (e.g. MAC layer). Upon receiving the configuration message containing the parameters associated with the bandwidth from the first or second node, the relay node may also send response message to the first or second node confirming the reception of the received message. The bandwidths may be configured at any suitable time or occasion. Examples of suitable occasions are: the initial setup of the relay node (i.e. when initially connected to the donor node which is serving the relay), when any relay parameter is modified, when any of the relay capability has changed etc.

According to other embodiments, methods in network node of configuring a relay to report its bandwidth capability are contemplated. In case it is not mandatory for the relay to support all possible bandwidths specified for a particular frequency band then the network node (first or second node) may request the relay to report its supported bandwidth capabilities for different links and for different signals (e.g. channel BW, PRS BW, etc.). The BW capability could be requested for each relay supported frequency band. The relay BW capability could be different for different types of links: access and backhaul. Assume a relay support band 1 (2 GHz) and band 8 (900 MHz) on backhaul and access links respectively. In one example the same relay may support only 5 MHz of channel BW on both links. In another example the relay may support two channel BWs of 10 MHz and 20 MHz on the backhaul link and one channel BW of 5 MHz on the backhaul link.

The BW capability could also be different for different types of signals. Consider an example in which the relay supports band 1 and band 8 on both access and backhaul links. Such a relay may support channel BWs of 10, 15 and 20 MHz, which correspond to the transmission BWs of 50, 75 and 100 RBs respectively. The same relay may support two PRS BWs of 50 and 75 RBs for transmitting the PRS on the access link. The network node may request the relay to report its BW capability either during the initial setup (i.e. when new relay node is added or connected to the donor node) or when the relay node bandwidth capability of the existing relay node is modified / changed (e.g. upgraded or downgraded). The network node may also request the relay node to report its bandwidth capability at any time e.g. whenever it suspects the relay node capability has been modified or such information is lost.

One or more set of identifiers described above may be used by the relay for reporting its bandwidth capability. The network node may also explicitly request whether the relay reports all different types of the bandwidth capabilities or specific information e.g. only supported channel bandwidths for the backhaul links or specific backhaul link in case of multi-hop relay or only PRS BW of the access link or measurement BW of the backhaul link etc.

The relay may also report the identifier of the pre-defined capability set of supported BWs on different links. Such pre-defined capabilities may be used to describe a set of specific values or range of values for a number of identifies. An example is given in Table 2:

**Table 2: Example of pre-defined capabilities / capability set of supported BWs**

| Capability | Bandwidth Backhaul link | Bandwidth Access link |
|---|---|---|
| Capability #1 | 5 MHz | 5 MHz |
| Capability #2 | 10 MHz | 5 MHz |
| Capability #3 | 10 MHz, 15MHz, 20 MHz | 15 MHz |
| Capability #4 | 5≤BW≤15MHz | ≥ 15 MHz |

A typical scenario might be that the second network node such as donor base station (e.g. donor eNB in LTE) configures the relay node which in turns report its bandwidth capability to the donor BS over the backhaul link (e.g. Un in LTE).

According to other examples methods in a relay node for reporting its bandwidth capability to network are contemplated. The relay node may report its bandwidth capabilities to the requested node (i.e. first or second network node) in terms of one or more set of the identifiers described above to indicate its BW capabilities. The relay may report its BW capability under the following circumstances or conditions (but not limited to):

### Reporting based on explicit request

According to one example the relay node may report its bandwidth capabilities to the target network node upon receiving explicit request from the requested network node (e.g. first or second node) as described above. The target network node receiving the BW capability information can be the first node or second node or both. Hence the requesting and the target nodes may be the same or can be different. There are several alternatives as explained below.

In one example the target node (i.e. the node receiving BW capabilities) may be a pre-defined node. For example the target node may be pre-defined as the same node which requests the relay to report its BW capabilities. In another example the second node (e.g. donor BS) may be pre-defined as the target node regardless which node requests the relay to report its BW capability. Yet in another example both first and second node may be pre-defined as the target nodes. Yet in another example different types of BWs may be reported to different target nodes e.g. channel BW and PRS BW to the second node (e.g. donorBS) and first node (e.g. positioning node), respectively.

According to another alternative the requesting node may specify the target node (e.g. node ID or pre-defined tag) in the BW capability request message sent to the relay. The specified target node may be the same for types of BWs or can be different for different types of BWs.

### Reporting based on pre-determined rule

According another embodiment, the relay node may report its bandwidth capabilities to the target network node without receiving any explicit request from any of the network node. The reporting is governed by one or more pre-determined rules as, for example, explained below:
- The relay can report its BW capabilities to the pre-determined target node (s) during set up phase e.g. during the initial setup, after the connection reestablishment (e.g. upon recovering from radio link failure) etc. The pre-determined target node can be the first or second node or both first/second nodes or any other node.
- The relay may also report its BW capabilities to the pre-determined node after one or more relay parameter is modified. For example the relay may report its BW if any of the relay bandwidth parameters is changed, any other capability is modified such as new bands are added or modified etc. The pre-determined target node can be the first or second node or both first/second nodes or any other node.

According to another exemplary embodiment, methods in network node for reporting relay bandwidth information to other nodes are contemplated. The embodiments described in preceding sections enable the network node such as first node or second node (e.g. donor BS etc) to acquire and/or configure the relay BWs (backhaul / access links). The relay BW information comprising of the acquired bandwidth capability or configured relay bandwidth information or both may also be signaled to other network nodes (i.e. a third network node). Assume that the donor base station acquires the relay bandwidth capability information from the relay node. The donor BS may also configure the relay BW of different relay link. The donor BS may signal this information (acquired BW capability and/or configured relay BW) to other nodes e.g. third node.

The relay BW information between the network nodes may be sent by the source node (e.g. first or second node) to the target node (i.e. third node) under one or more of the following scenarios but not limited to:
- Sent by the source to the target third nodes upon explicit request from the target node
- Sent by the source to the target third nodes when any new relay is incorporated or when new BW related information from existing relay is received.
- Sent by the source node to other potential target nodes proactively (e.g. periodically or at any time or when specific event occurs)
- Sent by the source node to other potential target nodes whenever any of the relay BW information is modified
- Sent by the source node to other potential target nodes whenever new frequency band is added or modified at the relay.

The source node represents the network node which contains the relay BW information and can be first or second node. The target node, which is the third node, uses the BW information for network management as described, for example, below.

According to another exemplary embodiment, methods in a network node for using relay bandwidths for network management and planning are also contemplated. The relay bandwidth information (i.e. acquired relay BW capability and/or configured relay BW can also be used by various network nodes for different purposes such as for the network/cell planning or dimensioning etc. For example the configured relay BW information can be provided by the second node (e.g. donor BS) to the appropriate node or use itself for network enhancement as elaborated below.

The network node such as donor BS (e.g. donor eNB in LTE) or even the third node (e.g. SON, O&M etc) can use the relay access link bandwidth capability for determining the cell capacity, peak user bit rate, potential number of users etc. The donor BS or the third node may further use this information to determine the number of relay nodes required to serve certain amount of traffic and/or users in the coverage area. In other words the statistics can be used to dimension the network as described below (e.g. number of relay nodes required in the network). The network node such as donor BS or third node may use the backhaul bandwidth in determining the backhaul capacity, peak data rate etc. Depending upon the bandwidth in use or supported by the relay on access and/or backhaul links, the donor BS or the third node may use other means to enhance capacity or data rate e.g. by using antenna with high gain etc.

The third node, which may be a positioning node, may use the PRS BW of the access link of the relay to identify the time required for the target positioning device (e.g. UE) for performing the positioning measurements. When the PRS BW is large then a longer time is required to do the positioning measurement and vice versa. In particular the third node, such as SON and/or O&M nodes, may further use the relay bandwidth information in dimensioning the overall network nodes or coverage. For example they can identify suitable number of relay nodes required in the given environment in the entire or part of the network.

According to another embodiment, a method of bandwidth configuration and reporting in multi-hop relays is contemplated. The previous embodiments mainly focus on single hop relay system where the relay node is directly connected to the donor. However the embodiments described above also apply to a relay system comprising of multiple hops. This means the donor BS may request the end relay (e.g. RN1 in Figure 11) and intermediate relay (e.g. RN2 in Figure 11) to report their BW capabilities on each link i.e. access link and backhaul links. This is further described below. Note there may be more than one intermediate relay node and one intermediate relay may even be connected to more than one relays.

### End relay BW capability reporting

The end relay (RN1 in Figure 11) can be configured by the donor node (e.g. donor BS, donor eNB in LTE or donor RNC in HSPA) to report its bandwidth capabilities (for backhaul and access link) either transparently (i.e. the intermediate relay i.e. RN2 may not be aware of the request) or non-transparently (i.e. RN2 may be aware of the request). In response to the request the end relay reports its bandwidth capabilities using the principles described above. In addition the intermediate relay nodes may also request the end relay to report its bandwidth capabilities. Furthermore the donor node may also separately set the bandwidths for the operation on the access and backhaul links. The end relay bandwidth capabilities may also be reported to other network nodes e.g. to other BS, positioning nodes etc as described above.

### Intermediate relay BW capability reporting and BW configuration

An intermediate relay (e.g. RN2 in Figure11) node may have multiple links to other relays. The intermediate relay may also be serving users i.e. it may have access link. The intermediate relay may also be a standalone / dedicated node acting only as the relay. In that case it may have only backhaul links. The intermediate relay may have different bandwidth capabilities for different links: backhaul links and access link. Alternatively the supported bandwidths on some of the links may be the same. For example the same bandwidths for the access link and backhaul link between end relay and intermediate relay may be supported. However the other backhaul link i.e. one between relay and donor node may operate over different sets of bandwidths.

According to this embodiment the intermediate relay node is able to report the supported BWs and also different types of BWs for each link e.g. each backhaul link and access link to the donor node or to other relay nodes. The reporting of supported bandwidths to the donor node or other relay node can be done transparently (i.e. other or intermediate nodes or relays are not aware of the reports) or non-transparently. Furthermore the reporting of the supported bandwidths for each link may take place independently in response to the request received from other nodes e.g. donor node, other relays or other network nodes (e.g. positioning node etc). Alternatively the reporting of the supported bandwidths for each link may be sent by the intermediate relay to other nodes proactively i.e. even without receiving any explicit request e.g. at the time of setup, reconfiguration, modification of one or more parameters. The intermediate relay node may use any of the principles described above to report its BW capability to the donor node or to other relays or to other nodes (e.g. BS, positioning node etc).

According to another embodiment the donor node (e.g. donor BS) may also be able to configure different types of the bandwidths (e.g. channel BW, PRS BW, RS BW, measurement BW etc) of the intermediate relay node for each link separately. The configuration can be done using the principles described above.

The embodiments described herein are applicable to any type of RAT (LTE, HSPA, GSM, CDMA2000, HRPD, Wimax etc) or a relay comprising of the mixture of RATs

(e.g. multi-standard radio (MSR) relays). Furthermore the MSR or non-MSR relay may comprise of contiguous carriers or non-contiguous carriers. The embodiments are also applicable to relay which supports carrier aggregation or multi-carrier operation or multi-carrier-multi-RAT operation. The embodiments are also applicable to wireless relays e.g. mobile relays, which are typically deployed in the movable vehicle to mainly serve users in the vehicle or a wireless terminal acting as a relay etc. Furthermore all different types and categories of relays may operate in single hop relay system or in multi-hop relay system.

From the foregoing, it will be appreciated that embodiments described herein enable the network to configure different BWs on different relay links (access and backhaul links) according to the need and requirements e.g. target bit rate, desired capacity, peak user rate etc. Moreover embodiments described herein enable the network to configure different BWs on different relay links for different purposes and need e.g. larger BW for data (e.g. channel BW) and smaller BW for certain types of measurements such as smaller PRS BW for positioning measurements. Additionally, embodiments enable the relay to separately report its BW capabilities (e.g. channel BW, PRS BW, measurement BW etc) for different links (access and backhaul) to the donor BS or to other network nodes. Still further, described embodiments enable the BW information (configured BW and/or reported BW capabilities) for the backhaul and access links to be used for various purposes: radio resource management, network planning / dimensioning, etc.

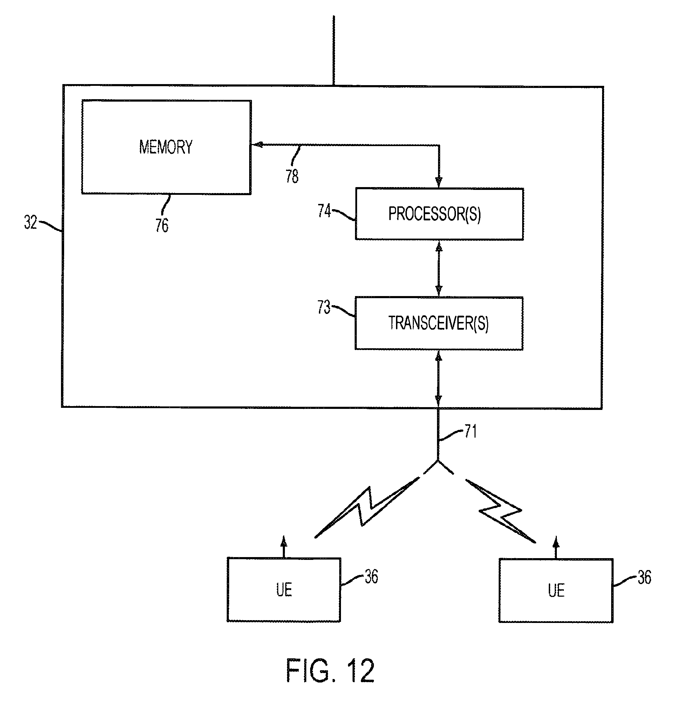

The foregoing methods can be embodied in nodes or structures which are configured to perform the steps described in the above embodiments. An exemplary relay, eNodeB or other node 32 described above is generically illustrated in Figure 12. If the node 32 includes air interface capability, e.g., if node 32 is a relay or eNodeB, then the node 32 includes one or more antennas 71 connected to processor(s) 74 via transceiver(s) 73. The processor 74 is configured to analyze and process signals received over an air interface via the antennas 71, as well as those signals received from core network node, e.g., access gateway, via, e.g., an interface. The processor(s) 74 may also be connected to one or more memory device(s) 76 via a bus 78. Further units or functions, not shown, for performing various operations as encoding, decoding, modulation, demodulation, encryption, scrambling, precoding, etc. may optionally be implemented not only as electrical components but also in software or a combination of these two possibilities as would be appreciated by those skilled in the art to enable the transceiver(s) 73 and processor(s) 74 to process uplink and downlink signals. The node 32, when operating as a relay, can, for example, be configured as described above to perform the functions associated with a relay. When operating as another node, e.g., a network node, the transceiver 73 can be omitted and other appropriate interfaces substituted therefore to enable standardized communications and signals to be transmitted which are configured to perform the afore-described relay-related functionality, e.g., configuring relays, receiving configuration data from relays, etc.

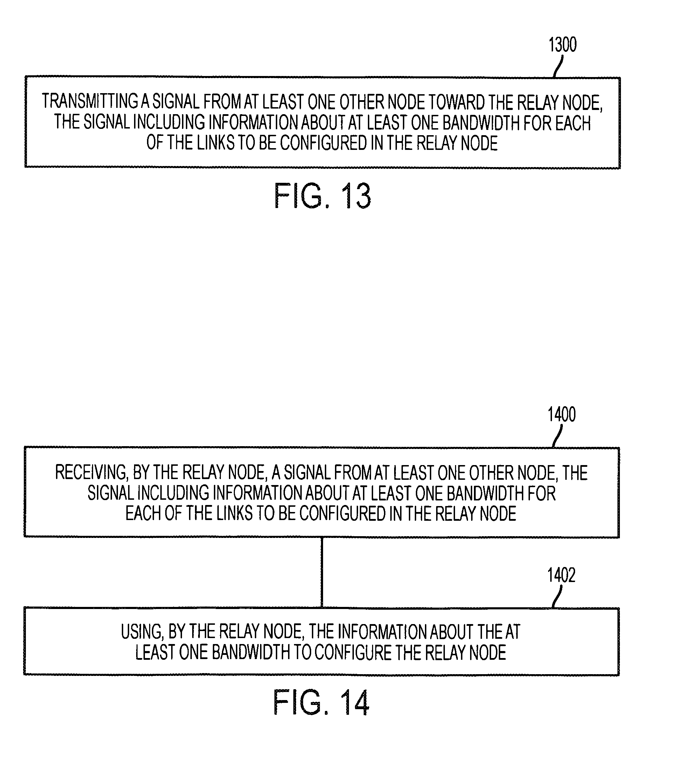

Similarly, embodiments can be reflected in methods such as those illustrated in the flowcharts of Figures 13 and 14. Starting with Figure 13, and according to an embodiment, a method for configuring a relay node can include the step 1300 of transmitting a signal from at least one other node toward the relay node, the signal including information about at least one bandwidth for each of the links to be configured in the relay node. In Figure 14, according to another embodiment, a method for configuring a relay node can include the step 1400 of receiving, by the relay node, a signal from at least one other node, the signal including information about at least one bandwidth for each of the links to be configured in the relay node and the step 1402 of using, by the relay node, the information about the at least one bandwidth to configure the relay node.

The above-described embodiments are intended to be illustrative in all respects, rather than restrictive, of the present invention. All such variations and modifications are considered to be within the scope of the present invention as defined by the following claims. No element, act, or instruction used in the description of the present application should be construed as critical or essential to the invention unless explicitly described as such. Also, as used herein, the article "a" is intended to include one or more items.

## Claims

1. A method for separately configuring multiple links of a relay node in a radio communication system, the method being **characterized by**
receiving, by at least one other node and from the relay node, a signal indicating bandwidth capabilities of an access (Uu) link of the relay node and a backhaul (Un) link of the relay node;
using the bandwidth capabilities to determine at least one bandwidth of the access (Uu) link and the backhaul (Un) link; and
transmitting a signal from the at least one other node toward the relay node, the signal including information about the at least one bandwidth for each of the access (Uu) link and the backhaul (Un) link to be configured in the relay node.

2. The method of claim 1, wherein the at least one bandwidth is at least one of: channel bandwidth, transmission bandwidth, measurement bandwidth, reference signal bandwidth and positioning reference signal bandwidth.

3. The method of any of claims 1-2, wherein the information includes at least one identifier which identifies at least one of:
- a type of the at least one bandwidth being configured in the relay node,
- a type of link being configured in the relay node,
- a size of the at least one bandwidth being configured in the relay node,
- whether the at least one bandwidth being configured in the relay node is for an uplink, a downlink or both the uplink and the downlink,
- identifies at least one frequency band associated with the at least one bandwidth to be configured in the relay node.

4. The method of any of claims 1-3, wherein bandwidth for each of the links to be configured in the relay node is determined based on one or more of the following criteria:
- characteristics of at least one frequency band over which the relay node operates;
- traffic load on relay node links;
- deployment scenarios, which includes indoor, outdoor or dense urban;
- radio environment of the relay node; and
- type of relay, which includes a fixed relay, a movable relay or a wireless terminal acting as a relay.

5. The method of claim 1-4, further comprising:
transmitting the received bandwidth capabilities to yet one or more other nodes, which uses the bandwidth capabilities for one or more network management tasks.

6. At least one network node for separately configuring multiple links of a relay node in a radio communication system, the at least one network node being **characterized by**
a transceiver configured to receive a signal indicating bandwidth capabilities of **an** access (Uu) link of the relay node and a backhaul (Un) link of the relay node,
a processor configured to use the bandwidth capabilities to determine the at least one bandwidth for each of the access (Uu) link and the backhaul (Un) link,
wherein the transceiver is further configured to transmit a signal from at least one other node toward the relay node, the signal including information about the at least one bandwidth for each of the access (Uu) link and the backhaul (Un) link to be configured in the relay node.

7. The at least one network node of claim 6, wherein the at least one bandwidth is at least one of: channel bandwidth, transmission bandwidth, measurement bandwidth, and reference signal bandwidth.

8. The at least one network node of any of claims 6-7, wherein the information includes at least one identifier which identifies at least one of:
- a type of the at least one bandwidth being configured in the relay node,
- a type of link being configured in the relay node,
- a size of the at least one bandwidth being configured in the relay node,
- whether the at least one bandwidth being configured in the relay node is for an uplink, a downlink or both the uplink and the downlink,
- identifies at least one frequency band associated with the at least one bandwidth to be configured in the relay node.

9. The at least one network node of any of claim 6-8, wherein the processor is further configured to transmit the received bandwidth capabilities to yet one or more other nodes, which uses the bandwidth capabilities for one or more network management tasks.

10. The at least one network node of any of claims 6-9, wherein bandwidth for each of the links to be configured in the relay node is determined based on one or more of the following criteria:
- characteristics of at least one frequency band over which the relay node operates;
- traffic load on relay node links;
- deployment scenarios, which includes indoor, outdoor or dense urban;
- radio environment of the relay node; and
- type of relay, which includes a fixed relay, a movable relay or a wireless terminal acting as a relay.

11. A method for separately configuring multiple links in a relay node in a radio communication system, being **characterized by**
transmitting, by the relay node, a signal indicating bandwidth capabilities of an access (Uu) link of the relay node and a backhaul (Un) link of the relay node,
receiving, by the relay node, a signal from at least one other node, the signal including information about at least one bandwidth for each of the access (Uu) link and a backhaul (Un) link to be configured in the relay node; and
using, by the relay node, the information about the at least one bandwidth to configure the relay node.

12. The method of claim 10, wherein the at least one bandwidth is at least one of: channel bandwidth, transmission bandwidth, measurement bandwidth, and reference signal bandwidth.

13. A relay node being **characterized by**
a transceiver configured to transmit a signal indicating bandwidth capabilities of an access (Uu) link of the relay node and a backhaul (Un) link of the relay node and receive a signal from at least one other node, the signal including information about at least one bandwidth associated with each of the access (Uu) link and the backhaul (Un) link to be configured in the relay node; and
a processor configured to use the information about the at least one bandwidth to configure the relay node.

14. The relay node of claim 13, wherein the at least one bandwidth is at least one of:
channel bandwidth, transmission bandwidth, measurement bandwidth, and reference signal bandwidth.

15. The relay node of any of claims 13-14, wherein the information includes at least one identifier which identifies at least one of:
- a type of the at least one bandwidth being configured in the relay node,
- a type of link being configured in the relay node,
- a size of the at least one bandwidth being configured in the relay node,
- whether the at least one bandwidth being configured in the relay node is for an uplink, a downlink or both the uplink and the downlink,
- identifies at least one frequency band associated with the at least one bandwidth to be configured in the relay node.

## Patentansprüche

1. Verfahren zum separaten Konfigurieren von mehrfachen Verbindungen eines Relaisknotens in einem Funkkommunikationssystem, wobei das Verfahren **gekennzeichnet ist durch**:
Empfangen eines Signals, das Bandbreitenfähigkeiten einer Zugangs-Verbindung (Uu) des Relaisknotens und einer Backhaul-Verbindung (Un) des Relaisknotens anzeigt, **durch** mindestens einen anderen Knoten und vom Relaisknoten;
Verwenden der Bandbreitenfähigkeiten, um mindestens eine Bandbreite der Zugangs-Verbindung (Uu) und der Backhaul-Verbindung (Un) zu bestimmen; und
Übertragen eines Signals vom mindestens einen anderen Knoten zum Relaisknoten, wobei das Signal Information über die mindestens eine Bandbreite für jede der Zugangs-Verbindung (Uu) und der Backhaul-Verbindung (Un) einschließt, die im Relaisknoten zu konfigurieren sind.

2. Verfahren nach Anspruch 1, worin die mindestens eine Bandbreite mindestens eine von Folgenden ist: Kanalbandbreite, Übertragungsbandbreite, Messbandbreite, Referenzsignal-Bandbreite und Positionierungsreferenzsignal-Bandbreite.

3. Verfahren nach einem der Ansprüche 1-2, worin die Information mindestens einen Identifikator einschließt, der mindestens eins von Folgenden identifiziert:
- einen Typ der mindestens einen Bandbreite, die im Relaisknoten konfiguriert wird,
- einen Typ von Verbindung, die im Relaisknoten konfiguriert wird,
- eine Größe der mindestens einen Bandbreite, die im Relaisknoten konfiguriert wird,
- ob die mindestens eine Bandbreite, die im Relaisknoten konfiguriert wird, für einen Uplink, einen Downlink oder sowohl den Uplink als auch den Downlink ist,
- mindestens ein Frequenzband identifiziert, das mit der mindestens einen Bandbreite assoziiert ist, die im Relaisknoten zu konfigurieren ist.

4. Verfahren nach einem der Ansprüche 1-3, worin die Bandbreite für jede der zu konfigurierenden Verbindungen im Relaisknoten auf der Basis von einem oder mehreren der folgenden Kriterien bestimmt wird:
- Charakteristiken von mindestens einem Frequenzband, über das der Relaisknoten arbeitet;
- Verkehrslast auf den Relaisknotenverbindungen;
- Einsatzszenarien, die Innenräume, Außenbereiche oder dicht besiedelte Urbanbereiche einschließen;
- Funkumgebung des Relaisknotens; und
- Typ des Relais, der ein festes Relais, ein bewegliches Relais oder ein drahtloses Endgerät einschließt, das als ein Relais funktioniert.

5. Verfahren nach einem der Ansprüche 1-4, außerdem umfassend:
Übertragen der empfangenen Bandbreitenfähigkeiten an noch einen oder mehrere andere Knoten, die die Bandbreitenfähigkeiten für eine oder mehrere Netzverwaltungsaufgaben verwenden.

6. Netzknoten oder mehrere Netzknoten zum separaten Konfigurieren von mehrfachen Verbindungen eines Relaisknotens in einem Funkkommunikationssystem, wobei der mindestens eine Netzknoten **gekennzeichnet ist durch**:
einen Transceiver, konfiguriert zum Empfangen eines Signals, das Bandbreitenfähigkeiten einer Zugangs-Verbindung (Uu) des Relaisknotens und einer Backhaul-Verbindung (Un) des Relaisknotens anzeigt;
einen Prozessor, konfiguriert zum Verwenden der Bandbreitenfähigkeiten, um mindestens eine Bandbreite für jede der Zugangs-Verbindung (Uu) und der Backhaul-Verbindung (Un) zu bestimmen; und
worin der Transceiver außerdem zum Übertragen eines Signals von mindestens einem anderen Knoten zum Relaisknoten konfiguriert ist, wobei das Signal Information über die mindestens eine Bandbreite für jede der Zugangs-Verbindung (Uu) und der Backhaul-Verbindung (Un) einschließt, die im Relaisknoten zu konfigurieren sind.

7. Netzknoten oder mehrere Netzknoten nach Anspruch 6, worin die mindestens eine Bandbreite mindestens eine von Folgenden ist: Kanalbandbreite, Übertragungsbandbreite, Messbandbreite und Referenzsignal-Bandbreite.

8. Netzknoten oder mehrere Netzknoten nach einem der Ansprüche 6-7, worin die Information mindestens einen Identifikator einschließt, der mindestens eins von Folgenden identifiziert:
- einen Typ der mindestens einen Bandbreite, die im Relaisknoten konfiguriert wird,
- einen Typ von Verbindung, die im Relaisknoten konfiguriert wird,
- eine Größe der mindestens einen Bandbreite, die im Relaisknoten konfiguriert wird,
- ob die mindestens eine Bandbreite, die im Relaisknoten konfiguriert wird, für einen Uplink, einen Downlink oder sowohl den Uplink als auch den Downlink ist,
- mindestens ein Frequenzband identifiziert, das mit der mindestens einen Bandbreite assoziiert ist, die im Relaisknoten zu konfigurieren ist.

9. Netzknoten oder mehrere Netzknoten nach einem der Ansprüche 6-8, worin der Prozessor außerdem konfiguriert ist zum Übertragen der empfangenen Bandbreitenfähigkeiten an noch einen oder mehrere andere Knoten, die die Bandbreitenfähigkeiten für eine oder mehrere Netzverwaltungsaufgaben verwenden.

10. Netzknoten oder mehrere Netzknoten nach einem der Ansprüche 6-9, worin die Bandbreite für jede der zu konfigurierenden Verbindungen im Relaisknoten auf der Basis von einem oder mehreren der folgenden Kriterien bestimmt wird:
- Charakteristiken von mindestens einem Frequenzband, über das der Relaisknoten arbeitet;
- Verkehrslast auf den Relaisknotenverbindungen;
- Einsatzszenarien, die Innenräume, Außenbereiche oder dicht besiedelte Urbanbereiche einschließen;
- Funkumgebung des Relaisknotens; und
- Typ des Relais, der ein festes Relais, ein bewegliches Relais oder ein drahtloses Endgerät einschließt, das als Relais funktioniert.

11. Verfahren zum separaten Konfigurieren von mehrfachen Verbindungen in einem Relaisknoten in einem Funkkommunikationssystem, **gekennzeichnet durch**:
Übertragen eines Signals **durch** den Relaisknoten, das Bandbreitenfähigkeiten einer Zugangs-Verbindung (Uu) des Relaisknotens und einer Backhaul-Verbindung (Un) des Relaisknotens anzeigt,
Empfangen eines Signals vom mindestens einen anderen Knoten **durch** den Relaisknoten, wobei das Signal Information über mindestens eine Bandbreite für jede der Zugangs-Verbindung (Uu) und einer Backhaul-Verbindung (Un) einschließt, die im Relaisknoten zu konfigurieren sind; und
Verwenden **durch** den Relaisknoten der Information über die mindestens eine Bandbreite zum Konfigurieren des Relaisknotens.

12. Verfahren nach Anspruch 10, worin die mindestens eine Bandbreite mindestens eine von Folgenden ist: Kanalbandbreite, Übertragungsbandbreite, Messbandbreite und Referenzsignal-Bandbreite.

13. Relaisknoten, **gekennzeichnet durch**:
einen Transceiver, konfiguriert zum Übertragen eines Signals, das Bandbreitenfähigkeiten einer Zugangs-Verbindung (Uu) des Relaisknotens und einer Backhaul-Verbindung (Un) des Relaisknotens anzeigt, und zum Empfangen eines Signals von mindestens einem anderen Knoten, wobei das Signal Information über mindestens eine Bandbreite einschließt, die mit jeder der Zugangs-Verbindung (Uu) und der Backhaul-Verbindung (Un) assoziiert ist, die im Relaisknoten zu konfigurieren sind; und
einen Prozessor, konfiguriert zum Verwenden der Information über die mindestens eine Bandbreite, um den Relaisknoten zu konfigurieren.

14. Relaisknoten nach Anspruch 13, worin die mindestens eine Bandbreite mindestens eine von Folgenden ist: Kanalbandbreite, Übertragungsbandbreite, Messbandbreite und Referenzsignal-Bandbreite.

15. Relaisknoten nach einem der Ansprüche 13-14, worin die Information mindestens einen Identifikator einschließt, der mindestens eins von Folgenden identifiziert:
- einen Typ der mindestens einen Bandbreite, die im Relaisknoten konfiguriert wird,
- einen Typ von Verbindung, die im Relaisknoten konfiguriert wird,
- eine Größe der mindestens einen Bandbreite, die im Relaisknoten konfiguriert wird,
- ob die mindestens eine Bandbreite, die im Relaisknoten konfiguriert wird, für einen Uplink, einen Downlink oder sowohl den Uplink als auch den Downlink ist,
- mindestens ein Frequenzband identifiziert, das mit der mindestens einen Bandbreite assoziiert ist, die im Relaisknoten zu konfigurieren ist.

## Revendications

1. Procédé destiné à configurer séparément de multiples liaisons d'un noeud de relais dans un système de communication radio, le procédé étant **caractérisé en ce qu'**il comporte les étapes ci-dessous consistant à :
recevoir, par le biais d'au moins un autre noeud et à partir du noeud de relais, un signal indiquant des capacités de bande passante d'une liaison (Uu) d'accès du noeud de relais et d'une liaison (Un) backhaul du noeud de relais ;
utiliser les capacités de bande passante en vue de déterminer au moins une bande passante de la liaison (Uu) d'accès et de la liaison (Un) backhaul ; et
transmettre un signal à partir dudit au moins un autre noeud vers le noeud de relais, le signal incluant des informations sur ladite au moins une bande passante pour chacune de la liaison (Uu) d'accès et de la liaison (Un) backhaul à configurer dans le noeud de relais.

2. Procédé selon la revendication 1, dans lequel ladite au moins une bande passante est au moins une bande passante parmi : une bande passante de canal, une bande passante de transmission, une bande passante de mesure, une bande passante de signal de référence et une bande passante de signal de référence de positionnement.

3. Procédé selon l'une quelconque des revendications 1 à 2, dans lequel les informations incluent au moins un identifiant qui identifie au moins l'un des éléments parmi :
- un type de ladite au moins une bande passante qui est configurée dans le noeud de relais ;
- un type de liaison qui est configuré dans le noeud de relais ;
- une taille de ladite au moins une bande passante qui est configurée dans le noeud de relais ;
- si ladite au moins une bande passante qui est configurée dans le noeud de relais est destinée à une liaison montante, à une liaison descendante, ou à la fois à la liaison montante et à la liaison descendante ;
- et qui identifie au moins une bande de fréquence associée à ladite au moins une bande passante devant être configurée dans le noeud de relais.

4. Procédé selon l'une quelconque des revendications 1 à 3, dans lequel la bande passante pour chacune des liaisons à configurer dans le noeud de relais est déterminée sur la base d'un ou plusieurs des critères ci-dessous :
- des caractéristiques d'au moins une bande de fréquence sur laquelle le noeud de relais est exploité ;
- une charge de trafic sur les liaisons de noeud de relais ;
- des scénarios de déploiement, notamment en intérieur, en extérieur ou en milieu urbain dense ;
- un environnement radio du noeud de relais ; et
- un type de relais, notamment un relais fixe, un relais mobile ou un terminal sans fil faisant office de relais.

5. Procédé selon l'une quelconque des revendications 1 à 4, comprenant en outre l'étape ci-dessous consistant à :
transmettre les capacités de bande passante reçues à encore un ou plusieurs autres noeuds, lesquels utilisent les capacités de bande passante pour une ou plusieurs tâches de gestion de réseau.

6. Au moins un noeud de réseau destiné à configurer séparément de multiples liaisons d'un noeud de relais dans un système de communication radio, ledit au moins un noeud de réseau étant **caractérisé par** :
un émetteur-récepteur configuré de manière à recevoir un signal indiquant des capacités de bande passante d'une liaison (Uu) d'accès du noeud de relais et d'une liaison (Un) backhaul du noeud de relais ;
un processeur configuré de manière à utiliser les capacités de bande passante en vue de déterminer au moins une bande passante pour chacune de la liaison (Uu) d'accès et de la liaison (Un) backhaul ;
dans lequel l'émetteur-récepteur est en outre configuré de manière à transmettre un signal à partir dudit au moins un autre noeud vers le noeud de relais, le signal incluant des informations sur ladite au moins une bande passante pour chacune de la liaison (Uu) d'accès et de la liaison (Un) backhaul à configurer dans le noeud de relais.

7. Ledit au moins un noeud de réseau selon la revendication 6, dans lequel ladite au moins une bande passante est au moins une bande passante parmi : une bande passante de canal, une bande passante de transmission, une bande passante de mesure, et une bande passante de signal de référence.

8. Ledit au moins un noeud de réseau selon l'une quelconque des revendications 6 à 7, dans lequel les informations incluent au moins un identifiant qui identifie au moins l'un des éléments parmi :
- un type de ladite au moins une bande passante qui est configurée dans le noeud de relais ;
- un type de liaison qui est configurée dans le noeud de relais ;
- une taille de ladite au moins une bande passante qui est configurée dans le noeud de relais ;
- si ladite au moins une bande passante qui est configurée dans le noeud de relais est destinée à une liaison montante, à une liaison descendante, ou à la fois à la liaison montante et à la liaison descendante ;
- qui identifie au moins une bande de fréquence associée à ladite au moins une bande passante devant être configurée dans le noeud de relais.

9. Ledit au moins un noeud de réseau selon l'une quelconque des revendications 6 à 8, dans lequel le processeur est en outre configuré de manière à transmettre les capacités de bande passante reçues à encore un ou plusieurs autres noeuds, lesquels utilisent les capacités de bande passante pour une ou plusieurs tâches de gestion de réseau.

10. Ledit au moins un noeud de réseau selon l'une quelconque des revendications 6 à 9, dans lequel la bande passante pour chacune des liaisons à configurer dans le noeud de relais est déterminée sur la base d'un ou plusieurs des critères ci-dessous :
- des caractéristiques d'au moins une bande de fréquence sur laquelle le noeud de relais est exploité ;
- une charge de trafic sur les liaisons de noeuds de relais ;
- des scénarios de déploiement, notamment en intérieur, en extérieur ou en milieu urbain dense ;
- un environnement radio du noeud de relais ; et
- un type de relais, notamment un relais fixe, un relais mobile ou un terminal sans fil faisant office de relais.

11. Procédé destiné à configurer séparément de multiples liaisons d'un noeud de relais dans un système de communication radio, le procédé étant **caractérisé en ce qu'**il comporte les étapes ci-dessous consistant à :
transmettre, par le biais du noeud de relais, un signal indiquant des capacités de bande passante d'une liaison (Uu) d'accès du noeud de relais et d'une liaison (Un) backhaul du noeud de relais ;
recevoir, par le biais du noeud de relais, un signal en provenance d'au moins un autre noeud, le signal incluant des informations sur au moins une bande passante pour chacune de la liaison (Uu) d'accès et de la liaison (Un) backhaul à configurer dans le noeud de relais ; et
utiliser, par le biais du noeud de relais, les informations sur ladite au moins une bande passante en vue de configurer le noeud de relais.

12. Procédé selon la revendication 10, dans lequel ladite au moins une bande passante est au moins une bande passante parmi : une bande passante de canal, une bande passante de transmission, une bande passante de mesure, et une bande passante de signal de référence.

13. Noeud de relais, **caractérisé par** :
un émetteur-récepteur configuré de manière à transmettre un signal indiquant des capacités de bande passante d'une liaison (Uu) d'accès du noeud de relais et d'une liaison (Un) backhaul du noeud de relais, et à recevoir un signal en provenance d'au moins un autre noeud, le signal incluant des informations sur au moins une bande passante associée à chacune de la liaison (Uu) d'accès et de la liaison (Un) backhaul à configurer dans le noeud de relais ; et
un processeur configuré de manière à utiliser les informations sur ladite au moins une bande passante en vue de configurer le noeud de relais.

14. Noeud de relais selon la revendication 13, dans lequel ladite au moins une bande passante est au moins une bande passante parmi : une bande passante de canal, une bande passante de transmission, une bande passante de mesure, et une bande passante de signal de référence.

15. Noeud de relais selon l'une quelconque des revendications 13 à 14, dans lequel les informations incluent au moins un identifiant qui identifie au moins l'un des éléments parmi :
- un type de ladite au moins une bande passante qui est configurée dans le noeud de relais ;
- un type de liaison qui est configuré dans le noeud de relais ;
- une taille de ladite au moins une bande passante qui est configurée dans le noeud de relais ;
- si ladite au moins une bande passante qui est configurée dans le noeud de relais est destinée à une liaison montante, à une liaison descendante, ou à la fois à la liaison montante et à la liaison descendante ;
- qui identifie au moins une bande de fréquence associée à ladite au moins une bande passante devant être configurée dans le noeud de relais.
